# FASCICULE DE BREVET EUROPEEN

(11) **EP 2 360 035 B1**
(45) Date de publication et mention de la délivrance du brevet: **13.05.2015**
(21) Numéro de dépôt: 11155800.3
(22) Date de dépôt: 24.02.2011
(51) Int. Cl.: B60D 1/06, B60D 1/28

(54) **Système d'attelage notamment pour l'accouplement d'un véhicule de remorque à un véhicule tracteur**
Kupplungssystem, besonders für das Ankuppeln eines Anhängerfahrzeugs an ein Zugfahrzeug
Coupling system in particular for coupling a trailer vehicle to a tractor vehicle

(30) Priorité: 24.02.2010 FR 1051313
(43) Date de publication de la demande: 24.08.2011
(73) Titulaire: Pommier, 95310 Saint Ouen l'Aumone (FR)
(72) Inventeur: Preud'homme, Thierry, 95450, COMMENY (FR)
(74) Mandataire: Thinat, Michel

(56) Documents cités:
- WO-A1-01/81106
- NL-A- 7 216 903
- US-A- 2 998 982
- US-A- 3 549 173
- US-A- 4 467 598
- US-A- 5 072 964
- US-A- 5 362 084
- US-A1- 2006 186 639

## Description

L'invention concerne un système d'attelage notamment pour l'accouplement d'un véhicule de remorque à un véhicule tracteur, du type comprenant un crochet à boule d'attelage monté sur le véhicule tracteur et une tête d'attelage montée sur le véhicule de remorque et destinés à coopérer avec le crochet à boule pour assurer ledit accouplement, et un dispositif d'attelage secondaire comprenant des moyens de lien, tels que des moyens de chaîne, disposé entre des points d'attache situés respectivement du côté du véhicule tracteur et du côté du véhicule de remorque.

Les systèmes d'attelage, qui sont connus, comportent des chaînes disposées de part et d'autre du crochet d'attelage et les points de fixation de ces chaînes sont montés, généralement par soudage, sur une poutre transversale prévue sur le véhicule au niveau du pare-chocs arrière. Les points d'attache des chaînes côté remorque sont solidaires de la tête d'attelage de celle-ci. Les systèmes d'attelage connus présentent l'inconvénient majeur que leur dispositif d'attelage secondaire destiné à assurer un guidage résiduel de la remorque en cas de rupture d'un des composants de l'accouplement entre les véhicules tracteur et de remorque a une structure complexe et est difficile à monter.

Un système d'attelage selon le préambule de la revendication 1 est montré dans document NL 7216903.

L'invention a pour but de pallier ces inconvénients.

Pour atteindre ce but, le système d'attelage selon l'invention est caractérisé en ce que le dispositif d'attelage secondaire comporte un point d'attache côté véhicule tracteur, qui est prévu sur le crochet d'attelage à boule, et en ce que le point d'attache est réalisé de manière monobloc avec le crochet d'attelage.

Selon une autre caractéristique de l'invention, le système d'attelage est caractérisé en ce que le point d'attache est réalisé sous forme d'une saillie prévue au niveau de la branche avant porteuse de la boule, en dessous de celle-ci.

Selon encore une autre caractéristique de l'invention, le système d'attelage est caractérisé en ce que la saillie d'attelage s'étend vers l'avant en direction de la tête d'attelage de la remorque.

Selon encore une autre caractéristique de l'invention, le système d'attelage est caractérisé en ce que la saillie d'attache s'étend sensiblement vers le bas.

Selon encore une autre caractéristique de l'invention, le système d'attelage est caractérisé en ce que la saillie d'attelage comporte un trou de liaison mécanique du lien souple du dispositif d'attelage secondaire.

Selon encore une autre caractéristique de l'invention, le système d'attelage est caractérisé en ce que le point d'attache de la tête d'attelage est réalisé sous forme d'une patte fixée sur la tête d'attelage et dont l'extrémité libre est configurée pour la fixation dudit lien.

Selon encore une autre caractéristique de l'invention, le système d'attelage est caractérisé en ce que la patte d'attache comporte, à son extrémité libre, un trou de liaison mécanique du lien du dispositif d'attelage secondaire.

Selon encore une autre caractéristique de l'invention, le système d'attelage est caractérisé en ce que la longueur du lien précité est choisie telle que la tête d'attelage ne vienne pas en contact avec le sol dans le cas d'une défaillance de l'attelage de la tête d'attelage sur la boule du crochet à boule.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
La figure 1 est une vue latérale d'un système d'attelage selon l'invention, montrant celui-ci dans sa position d'accouplement de la tête d'attelage d'un véhicule de remorque sur le crochet d'attelage à boule d'un véhicule tracteur ;
la figure 2 est une vue en perspective du dispositif d'attelage à boule selon l'invention ;

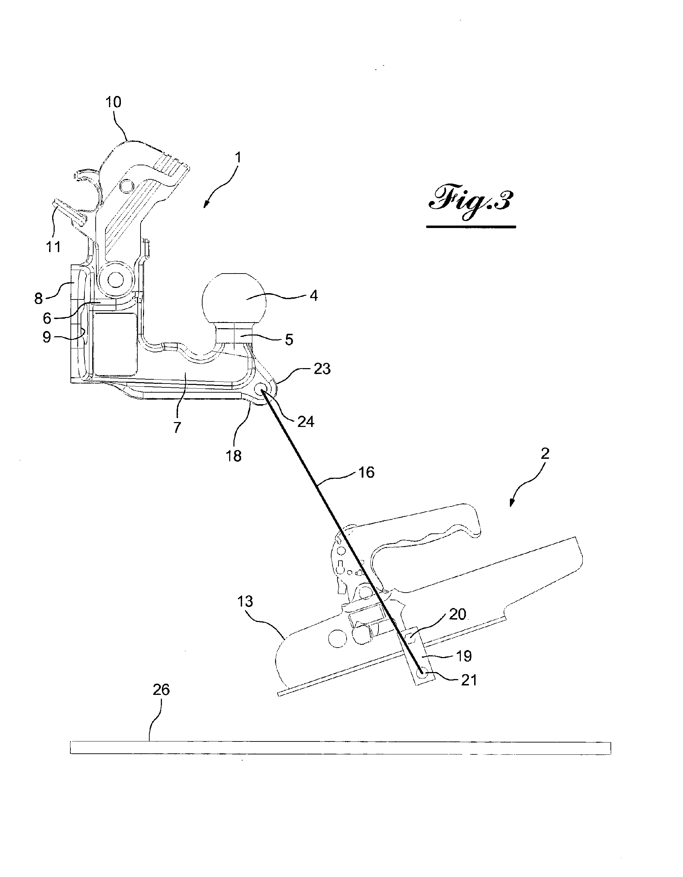

la figure 3 est une vue latérale du système d'attelage selon la figure 1 montrant celui-ci dans sa position d'un désaccouplement de la tête d'attelage du crochet d'attelage à boule, le crochet d'attelage et la tête d'attelage n'étant reliés que par le dispositif d'attelage secondaire, et
la figure 4 est une vue en perspective d'un deuxième mode de réalisation du crochet d'attelage à boule selon l'invention.

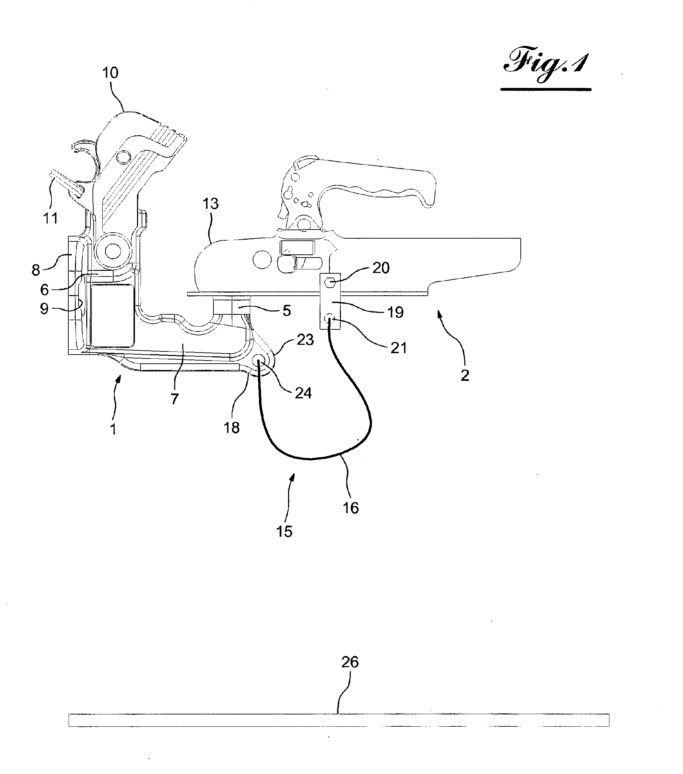

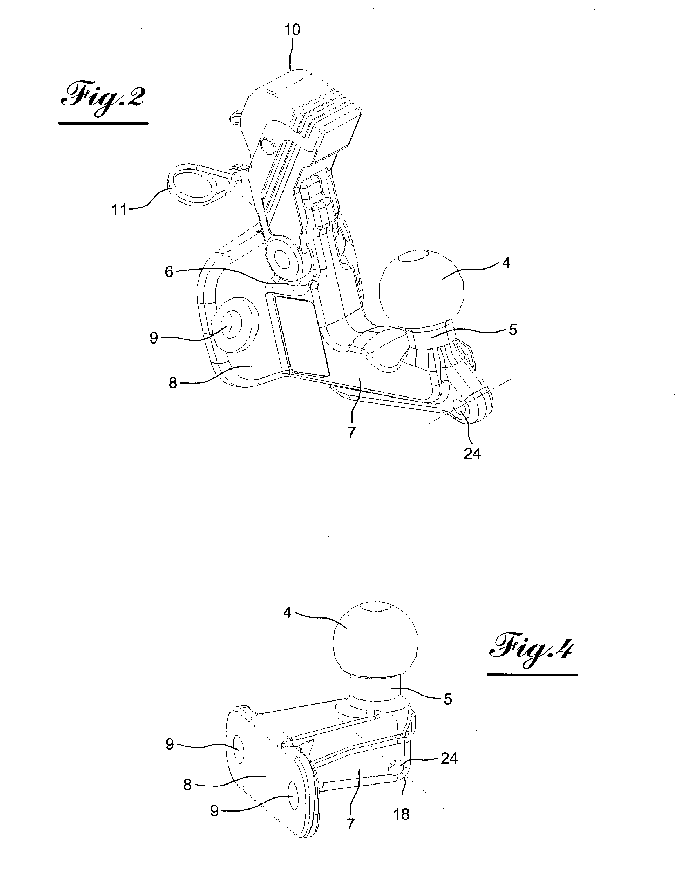

Sur les figures 1 et 2, qui montrent un système d'attelage d'un véhicule de remorque à un véhicule tracteur à l'état d'accouplement et à l'état de désaccouplement, seulement le dispositif en forme de crochet d'attelage du véhicule tracteur et la tête d'attelage du véhicule de remorque sont représentés. Sur les figures le crochet d'attelage à boule porte la référence 1 et la tête d'attelage la référence 2.

Les structures du crochet d'attelage 1 et de la tête d'attelage 2 sont de forme conventionnelle. Le crochet d'attelage 1 comporte, comme cela ressort particulièrement clairement de la figure 2, une boule d'attelage 4 à l'extrémité de la branche libre 5 du dispositif en forme de crochet. A l'autre branche 6 du crochet est prévue une plaque 8 permettant le montage du dispositif de crochet sur le véhicule tracteur, par exemple à l'aide de vis dont les trous de passage sont indiqués en 9. En haut de la branche 6 est articulé un levier 10 de verrouillage, qui est notamment prévu pour des timons par exemple de remorques de chantier, qui comportent un anneau destiné à passer pardessus la boule 4. Le levier de verrouillage 10 est pivotant entre sa position de repos représentée et une position en appui sur la boule 4 pour empêcher un désengagement de l'anneau. Le levier comporte un oeillet 11 de blocage dans sa position de repos. La figure 4 montre un mode de réalisation du dispositif d'attelage à boule 1 qui ne comporte pas de levier de verrouillage.

La tête d'attelage 2 dont la structure générale est connue en soi est destinée à être montée sur l'extrémité d'un timon de la remorque. La tête d'attelage comporte au niveau de son extrémité avant libre une cavité de réception de la boule 4, de forme complémentaire à celle de cette boule. La figure 1 montre la tête d'attelage dans sa position recevant la boule, c'est-à-dire de l'accouplement de la tête d'attelage sur le crochet d'attelage.

Les figures 1 et 2 montrent que le système d'attelage est pourvu d'un dispositif d'attelage secondaire 15 qui a pour fonction d'assurer un guidage résiduel de la remorque en cas de rupture d'un des composants de l'accouplement entre le véhicule tracteur et la remorque. Ce dispositif comporte un élément filaire souple 16, tel qu'une chaîne ou un câble, dont une extrémité est fixée à un point d'attache 18 du crochet à boule 1 tandis que l'autre extrémité est fixée à un point d'attache 19 solidaire de la tête d'attelage 2. Dans l'exemple représenté, le point d'attache 19 est réalisé sous forme d'une patte qui est fixée au niveau d'une extrémité, en 20, à la tête d'attelage 2, sur la face latérale extérieure de celle-ci, par exemple par une vis, tandis que l'autre extrémité comporte des moyens de fixation du lien 16, réalisé par exemple sous forme d'un trou 21 de passage du lien.

Conformément à l'invention, pour la fixation du lien au crochet d'attelage 1, celui-ci comporte à la figure 1 une saillie 23 prévue à la base de la branche 5 porteuse de la boule 4, dans laquelle est prévu un trou 24 destiné à recevoir le lien 16 ou un maillon en vue de sa liaison mécanique, si ce lien est formé par une chaîne. On constate que la saillie 23 s'étend vers la remorque, dans l'exemple représenté, selon un angle d'environ 45° par rapport à l'axe longitudinal de la branche 5, à l'avant d'une nervure 25 en bas le long de la base du crochet. La saillie 23 est disposée au milieu de la branche 5 dans le sens de la largeur de celle-ci.

La figure 4 montre un autre mode de réalisation de la saillie d'attache 23 pourvu d'un trou de liaison mécanique 24 du lien 16. Dans ce cas la saillie s'étend pratiquement verticalement sous la branche 5 et présente la forme d'une nervure 26 s'étendant sous toute la base du crochet entre la branche 5 avant et la plaque de fixation 8 directement à l'arrière de la base 7.

Il ressort de la description de l'invention qui vient d'être faite et des figures qui ne sont données, comme celle-ci, qu'à titre d'exemple, que la particularité et l'avantage majeur de l'invention réside dans le fait que la saillie d'attache du dispositif d'attelage secondaire est prévue directement sur le crochet d'attelage à boule 4 sur la branche avant libre 5 de ce crochet, en dessous de la boule en étant ainsi réalisé de manière monobloc avec le crochet. Le positionnement de la saillie d'attache à un emplacement à l'avant et sous la boule présente l'avantage particulier que, dans cette position, le lien 16 du dispositif d'attelage secondaire reliant la remorque au véhicule tracteur n'est pas mis en tension lors des manoeuvres des véhicules. Le point d'attache réalisé de façon monobloc permet un gain économique et supprime les risques inhérents aux dispositifs connus dans lesquels les points d'attache sont montés par soudure sur une poutre transversale du véhicule tracteur. Bien entendu, le montage du dispositif d'attache secondaire de sécurité est très simple dans le cas de l'invention, contrairement aux dispositifs de l'état de la technique. Il est encore à noter que, dans le cas de l'invention, le lien de sécurité, en forme de chaîne ou de câble, peut être dimensionné de façon que la tête d'attelage, lors d'un désengagement accidentel de la tête de la boule ne puisse pas venir en contact du sol indiqué sur les dessins en 26. De plus, l'invention ne nécessite qu'un lien de sécurité qui est situé dans un emplacement central.

## Revendications

1. Système d'attelage notamment pour l'accouplement d'un véhicule de remorque à un véhicule tracteur, du type comprenant un dispositif en forme de crochet à boule d'attelage monté sur le véhicule tracteur et une tête d'attelage monté sur le véhicule de remorque et destiné à coopérer avec la boule du dispositif crochet pour ainsi assurer ledit accouplement, et un dispositif d'attelage secondaire de sécurité comprenant des moyens de lien, tels que des moyens de chaîne ou de câble, disposés entre des points d'attache situés respectivement du côté du véhicule tracteur et du véhicule de remorque, et le dispositif d'attelage secondaire de sécurité (15) comportant un point d'attache (18) côté véhicule tracteur, qui est prévu sur le crochet à boule (1); **caractérisé en ce que** le point d'attache (15) est réalisé de manière monobloc avec le crochet d'attelage (1).

2. Système d'attelage selon la revendication 1, **caractérisé en ce que** le point d'attache est réalisé sous forme d'une saillie (23) prévue au niveau de la branche avant (5) porteuse de la boule (4), en dessous de celle-ci.

3. Système d'attelage selon la revendication 2, **caractérisé en ce que** la saillie d'attelage (23) s'étend vers l'avant en direction de la tête d'attelage (2) de la remorque.

4. Système d'attelage selon l'une des revendications 1 ou 2, **caractérisé en ce que** la saillie d'attache (26) s'étend sensiblement vers le bas.

5. Système d'attelage selon l'une des revendications 2 à 4, **caractérisé en ce que** la saillie d'attelage comporte un trou (24) de liaison mécanique du lien souple du dispositif d'attelage secondaire.

6. Système d'attelage selon l'une des revendications 1 à 5, **caractérisé en ce que** le point d'attache (19) de la tête d'attelage (1) est réalisé sous forme d'une patte fixée sur la tête d'attelage (1) et dont l'extrémité libre est configurée pour la fixation dudit lien.

7. Système d'attelage selon la revendication 6, **caractérisé en ce que** la patte d'attache (19) comporte, à son extrémité libre, un trou (21) de liaison mécanique du lien (16) du dispositif d'attelage secondaire.

8. Système d'attelage selon l'une des revendications 1 à 7, **caractérisé en ce que** la longueur du lien précité (16) est choisie telle que la tête d'attelage (2) ne vienne pas en contact avec le sol dans le cas d'une défaillance de l'attelage de la tête d'attelage (1) sur la boule (4) du crochet à boule (1).

## Patentansprüche

1. Kupplungssystem, insbesondere für das Ankuppeln eines Anhängerfahrzeugs an ein Zugfahrzeug, der Bauart, die eine Vorrichtung in Form eines Hakens mit Kupplungskugel, die an das Zugfahrzeug montiert ist, und einen Kupplungskopf, der an das Anhängerfahrzeug montiert ist und zur Zusammenarbeit mit der Kugel der Hakenvorrichtung, um derart das Ankuppeln sicherzustellen, bestimmt ist, und eine sekundäre Sicherheitskupplungsvorrichtung, die Verbindungsmittel wie Ketten- oder Kabelmittel umfasst, die zwischen Befestigungspunkten angeordnet sind, die sich jeweils auf der Seite des Zugfahrzeugs und des Anhängerfahrzeugs befinden, umfasst, wobei die sekundäre Sicherheitskupplungsvorrichtung (15) einen zugfahrzeugseitigen Befestigungspunkt (18) aufweist, der am Kugelhaken (1) vorgesehen ist, **dadurch gekennzeichnet, dass** der Befestigungspunkt (15) mit dem Kupplungshaken (1) in Einblockweise hergestellt ist.

2. Kupplungssystem nach Anspruch 1, **dadurch gekennzeichnet, dass** der Befestigungspunkt in Form eines Vorsprungs (23) hergestellt ist, der auf Ebene des tragenden vorderen Arms (5) der Kugel (4) unterhalb derselben vorgesehen ist.

3. Kupplungssystem nach Anspruch 2, **dadurch gekennzeichnet, dass** sich der Kupplungsvorsprung (23) nach vorn in Richtung des Kupplungskopfs (2) des Anhängers erstreckt.

4. Kupplungssystem nach einem der Ansprüche 1 oder 2, **dadurch gekennzeichnet, dass** sich der Befestigungsvorsprung (26) etwa nach unten erstreckt.

5. Kupplungssystem nach einem der Ansprüche 2 bis 4, **dadurch gekennzeichnet, dass** der Kupplungsvorsprung eine mechanische Verbindungsöffnung (24) der elastischen Verbindung der sekundären Kupplungsvorrichtung aufweist.

6. Kupplungssystem nach einem der Ansprüche 1 bis 5, **dadurch gekennzeichnet, dass** der Befestigungspunkt (19) des Kupplungskopfs (1) in Form eine Zunge ausgebildet ist, die die auf dem Kupplungskopf (1) befestigt ist und von der ein freies Ende für die Befestigung der Verbindung konfiguriert ist.

7. Kupplungssystem nach Anspruch 6, **dadurch gekennzeichnet, dass** die Befestigungszunge (19) an ihrem freien Ende eine mechanische Verbindungsöffnung (21) der Verbindung (16) der sekundären Kupplungsvorrichtung aufweist.

8. Kupplungssystem nach einem der Ansprüche 1 bis 7, **dadurch gekennzeichnet, dass** die Länge der vorgenannten Verbindung (16) derartig ausgewählt ist, dass der Kupplungskopf (2) bei einem Versagen der Kupplung des Kupplungskopfs (1) auf der Kugel (4) des Kugelhakens (1) nicht mit dem Boden in Kontakt kommt.

## Claims

1. A coupling system notably for coupling a trailer vehicle to a tractor vehicle, of the type comprising a hook-shaped device with a coupling ball mounted on the tractor vehicle and a coupling head mounted on the trailer vehicle and intended to cooperate with the ball of the hook-shaped device so as to thereby ensure said coupling, and a secondary safety coupling device comprising linking means, such as chain or cable means, positioned between attachment points located on the side of the tractor vehicle and of the trailer vehicle respectively, and the secondary safety coupling device (15) including an attachment point (18) on the side of the tractor vehicle, which is provided on the ball hook (1); **characterized in that** the attachment point (15) is made in one piece with the coupling hook (1).

2. The coupling system according to claim 1, **characterized in that** the attachment point is made as a protrusion (23) provided at the front branch (5) bearing the ball (4), below the latter.

3. The coupling system according to claim 2, **characterized in that** the coupling protrusion (23) extends forwards towards the coupling head (2) of the trailer.

4. The coupling system according to one of claims 1 or 2, **characterized in that** the attachment protrusion (26) substantially extends downwards.

5. The coupling system according to one of claims 2 to 4, **characterized in that** the coupling protrusion includes a mechanical link hole (24) of the flexible connection of the secondary coupling device.

6. The coupling system according to one of claims 1 to 5, **characterized in that** the attachment point (19) of the coupling head (1) is made as a tab attached on the coupling head (1) and the free end of which is configured for attachment of said connection.

7. The coupling system according to claim 6, **characterized in that** the attachment tab (19) at its free end includes a mechanical link hole (21) for the connection (16) of the secondary coupling device.

8. The coupling system according to one of claims 1 to 7, **characterized in that** the length of the aforementioned connection (16) is selected so that the coupling head (2) does not come into contact with the ground in the case of a failure of the coupling of the coupling head (1) on the ball (4) of the ball hook (1).
